# FASCICULE DE BREVET EUROPEEN

(11) **EP 4 673 698 B1**
(45) Date de publication et mention de la délivrance du brevet: **02.12.2026**
(21) Numéro de dépôt: 24707783.7
(22) Date de dépôt: 28.02.2024
(51) Int. Cl.: F28D 1/03, F28D 21/00, F28F 3/04, F28F 3/12, H01M 10/6556, H01M 10/625, H01M 10/6554, H01M 10/6557, H01M 10/613

(54) **DISPOSITIF DE RÉGULATION THERMIQUE ET DISPOSITIF DE CHARGE COMPRENANT UN DISPOSITIF DE RÉGULATION THERMIQUE**
WÄRMEREGELUNGSVORRICHTUNG UND LADEVORRICHTUNG MIT EINER WÄRMEREGELUNGSVORRICHTUNG
THERMAL REGULATION DEVICE, AND CHARGING DEVICE COMPRISING A THERMAL REGULATION DEVICE

(30) Priorité: 01.03.2023 FR 2301885
(43) Date de publication de la demande: 07.01.2026
(73) Titulaire: Valeo Electrification, 95892 Cergy Pontoise (FR)
(72) Inventeur: FERNANDEZ, Roberto, 50011 Zaragoza (ES); OGER, Philippe, 78322 Le Mesnil-Saint-Denis Cedex (FR); JIMENEZ, Jesus, 50011 Zaragoza (ES); LANARD, Jean-Louis, 78322 Le Mesnil-Saint-Denis Cedex (FR); BARRE, Boris, 78322 Le Mesnil-Saint-Denis Cedex (FR)
(74) Mandataire: Valeo Powertrain Systems
(86) Numéro de dépôt international: PCT/EP2024/055123
(87) Numéro de publication internationale: WO 2024/180139

(56) Documents cités:
- EP-A1- 3 741 876
- WO-A1-2020/178536
- WO-A1-2020/212457
- DE-A1- 102017 202 552

## Description

La présente invention concerne un dispositif de régulation thermique, notamment de refroidissement, notamment pour composant électrique susceptible de dégager de la chaleur lors de son fonctionnement, notamment un dispositif de refroidissement d'au moins une batterie ou cellules de batterie de véhicule, par exemple un véhicule automobile. Un tel dispositif est connu du document DE-A-3741876, qui divulgue un dispositif conforme au préambule de la revendication 1.

Le véhicule peut être de type terrestre, maritime ou aérien.

Les composants susceptibles d'être concernés par la présente invention peuvent être des éléments de stockage d'énergie électrique, notamment des éléments de batteries, ou d'électronique de puissance, par exemple de façon non limitative des semi-conducteurs, tels que des diodes ou transistors. Il pourrait s'agir aussi de composants de serveurs informatiques.

Les systèmes électriques ou électroniques, par exemple des dispositifs de stockage d'énergie électrique au sein d'un véhicule automobile ou des serveurs informatiques, peuvent être soumis à des contraintes importantes du fait d'un besoin d'alimenter un élément nécessitant une quantité importante d'énergie ou du fait de la nécessité d'effectuer un traitement important d'informations en un minimum de temps. Ainsi, lorsque ces systèmes électriques ou électroniques sont fortement mis à contribution, ceux-ci sont susceptibles de dégager une quantité importante de chaleur et de ce fait d'atteindre des températures élevées nuisant à la durée de vie desdits systèmes électriques ou électroniques.

Afin de limiter la température des systèmes électriques ou électroniques, il est connu de prévoir des dispositifs de refroidissement associés à ces systèmes. De tels dispositifs de refroidissement sont agencés au voisinage des pièces du système électrique ou électronique dégageant de la chaleur et sont parcourus par un fluide de refroidissement dont la température permet un échange de calorie avec ces pièces et le refroidissement de ces dernières. Ces dispositifs de refroidissement peuvent être notamment des dispositifs à plaques, obtenus par un assemblage d'au moins deux plaques embouties et soudées entre elles afin de former des canaux entre lesdites plaques, lesdits canaux permettant la circulation du fluide de refroidissement.

L'invention concerne notamment des échangeurs thermiques à plaques destinés à la circulation d'un fluide frigorigène permettant le refroidissement des batteries de véhicules hybrides ou électriques.

Industriellement, ces échangeurs sont généralement réalisés dans des matériaux métalliques, et sont assemblés par brasage.

Le procédé de brasage bien que très répandu dans l'industrie aujourd'hui comporte des désavantages, notamment celui de l'empreinte carbone d'un tel procédé de fabrication, et si bien que dans le but de réduire, notamment, la consommation électrique et donc les émissions générées indirectement par un tel procédé, il est peu à peu proposé des solutions alternatives pour joindre deux plaques, l'une d'elles étant l'assemblage des deux plaques par soudure, notamment par soudure laser.

Le procédé de soudage laser présente plusieurs avantages. En effet, un tel procédé est moins énergivore et moins polluant qu'un soudage par brasage. Il permet d'assurer un joint fiable, sans fuite, particulièrement dans les lignes droites. Cependant, les échangeurs de chaleurs comprennent d'autres types de trajectoires, telles que des tours, des boucles ou d'autres trajectoires complexes.

Ces trajectoires, où la direction du faisceau laser change, sont plus sensibles aux défauts de soudage, comme les fissures, qui peuvent conduire à des fuites.

Les demandes mécaniques des clients concernant les refroidisseurs de batterie sont de plus en plus nombreuses, et le comportement mécanique du refroidisseur est devenu un sujet important.

La soudure de la batterie se fait typiquement de l'intérieur du refroidisseur vers l'extérieur du refroidisseur, afin de pouvoir absorber les dilatations et déformations des plaques causées par les soudures précédentes. Ceci fait que plus on s'éloigne du centre des plaques, plus la surface des plaques peut être déformée ou qu'il est difficile de maintenir les deux plaques en contact. Le risque de fuites est alors accru.

En outre, de telles déformations peuvent créer des espaces entre les deux plaques, dans la zone qui ne comprend pas de canaux. Ainsi, même sans fuite, l'échangeur de chaleur ainsi assemblé comprends des espaces dans lesquels de l'humidité, des poussières ou d'autres éléments peuvent venir se loger et provoquer des problèmes, notamment de corrosion, ce qui aura pour effet d'augmenter le risque futur de fuite ou de fragilisation mécanique.

Il en résulte un besoin pour obtenir des échangeurs de chaleurs durables robustes et sans fuites, et ce à l'aide d'un procédé plus écologique, rapide et fiable.

La présente invention a pour objectif de pallier au moins partiellement un ou plusieurs des inconvénients précités en proposant un échangeur de chaleur, dont la résistance à la corrosion est améliorée, afin d'assurer les exigences de durabilité, d'étanchéité et de résistance mécanique, tout en réduisant la consommation d'électricité et la production de polluants lors de l'assemblage.

Le tracé de soudage peut par exemple correspondre au contour de chaque plaque afin d'éviter que le fluide de refroidissement ne s'écoule hors du dispositif de refroidissement. Le tracé de soudage peut également être linéaire afin de définir et d'isoler un canal de circulation de fluide ou une pluralité de canaux de circulation de fluide les uns par rapport aux autres.

L'invention concerne ainsi un dispositif de régulation thermique, notamment de refroidissement, pour composant électrique susceptible de dégager de la chaleur lors de son fonctionnement, notamment pour un module de stockage d'énergie électrique, ce dispositif comportant une première plaque et une seconde plaque assemblée avec la première plaque délimitée chacune par des bords, pour former ensemble une pluralité de canaux de circulation pour un fluide caloporteur, notamment un fluide réfrigérant, la pluralité de canaux définissant une zone de canaux, l'assemblage des deux plaques étant réalisée par soudure laser, de préférence par transparence, au niveau de la zone de canaux, le dispositif étant caractérisé en ce que le dispositif comprend un moyen de jonction supplémentaire différent de la soudure laser par transparence, joignant les bords d'au moins une plaque à l'autre plaque.

La jonction supplémentaire permet ainsi d'améliorer la résistance du dispositif à la corrosion, là où la soudure laser par transparence peut être sensible à cette corrosion lors du vieillissement et/ou de l'utilisation du dispositif.

On comprend par « l'assemblage réalisée par soudure laser au niveau de la zone de canaux » que les deux plaques sont fixées ensemble au niveaux des canaux de manière à permettre entre les deux pièces une circulation de fluide caloporteur.

Selon l'un des aspects de l'invention, l'assemblage des deux plaques est réalisée par soudure laser par transparence au niveau de la zone de canaux.

Selon l'un des aspects de l'invention, le moyen de jonction supplémentaire est choisi parmi la soudure d'angle par laser, la soudure laser avec un fil d'apport de matière, la colle, ou une combinaison de ceux-ci.

Selon l'un des aspects de l'invention, la seconde plaque, de préférence plane, s'étend au-delà des bords de la première plaque, qui est de préférence emboutie afin de former une partie des parois des canaux.

Selon l'un des aspects de l'invention, le moyen de jonction supplémentaire joint les bords d'au moins une plaque à une portion de l'autre plaque ne formant pas les bords de ladite autre plaque.

Selon l'un des aspects de l'invention, le moyen de jonction supplémentaire joint les plaques bords à bords.

Selon l'un des aspects de l'invention, les bords d'au moins l'une des plaques comprennent une déformation formant un repli en direction de l'autre plaque.

Selon l'un des aspects de l'invention, une des deux plaques comprend autour de la zone de canaux un embouti qui comporte une colle formant joint d'étanchéité comprimé entre les deux plaques.

L'invention propose également un procédé d'assemblage de deux plaques pour obtenir un dispositif de régulation thermique, notamment de refroidissement, pour composant électrique susceptible de dégager de la chaleur lors de son fonctionnement, notamment pour un module de stockage d'énergie électrique, le procédé étant caractérisé en ce qu'il comprend les étapes suivantes,
- Fournir deux plaques délimitée chacune par des bords, au moins une des plaques étant emboutie afin de former une partie des parois des canaux de façon à former avec l'autre plaque ensemble une pluralité de canaux de circulation pour un fluide caloporteur, notamment un fluide réfrigérant, la pluralité de canaux définissant une zone de canaux,
- Soudure laser, de préférence par transparence, des deux plaques au niveau de la zone de canaux,
- Puis jonction des bords d'une plaque à l'autre plaque par un moyen de jonction supplémentaire différent.

Selon l'un des aspects de l'invention, , le procédé comprend en outre une étape supplémentaire de déformation des bords d'une plaque de façon à former un repli vers l'autre plaque.

Selon l'un des aspects de l'invention, , le procédé comprend en outre une étape de mise en place de colle formant un joint dans paroi emboutie de canaux définissant la totalité du périmètre de la zone de canaux et formant un canal d'étanchéité, de façon à ce que la colle est comprimée par les deux plaques lors de leur assemblage, notamment suivi d'une étape de traitement thermique de la colle dans la paroi emboutie une fois les plaques du dispositif assemblées et ladite colle comprimée.

Selon l'un des aspects de l'invention, le procédé comprend en outre une étape de traitement thermique de la colle dans la paroi emboutie une fois les plaques du dispositif assemblées et ladite colle comprimée.

### DESCRIPTION DETAILLEE DES FIGURES

D'autres caractéristiques et avantages de l'invention apparaitront plus clairement à la lecture de la description suivante, donnée à titre d'exemple illustratif et non limitatif, et des dessins annexés parmi lesquels :
- la [Figure 1] illustre, schématiquement et partiellement, un dispositif selon de refroidissement selon l'art antérieur;
- la [Figure 2] illustre, schématiquement, un dispositif selon un premier mode de réalisation de l'invention selon une vue en perspective,
- la [Figure 3] illustre, schématiquement et partiellement, un détail du dispositif selon un second mode de réalisation de l'invention, en vue de coupe ;
- la [Figure 4] illustre, schématiquement et partiellement, un détail du dispositif selon un troisième mode de réalisation de l'invention, en vue de coupe,
- la [Figure 5] illustre, schématiquement et partiellement, un détail du dispositif selon un quatrième mode de réalisation de l'invention, en vue de coupe,

### DISPOSITIF DE REGULATION THERMIQUE

L'invention concerne en particulier le dispositif de régulation thermique 3 décrit plus en détail ci-après. Il comporte un dispositif de régulation thermique, notamment de refroidissement, pour composant électrique susceptible de dégager de la chaleur lors de son fonctionnement, notamment pour un module de stockage d'énergie électrique, ce dispositif comportant une première plaque (2) et une seconde plaque (3) assemblée avec la première plaque délimitée chacune par des bords, pour former ensemble une pluralité de canaux de circulation (40) pour un fluide caloporteur, notamment un fluide réfrigérant, la pluralité de canaux définissant une zone de canaux (4), l'assemblage des deux plaques (2, 3) étant réalisée par soudure laser, de préférence par transparence, au niveau de la zone de canaux, le dispositif étant caractérisé en ce que le dispositif comprend un moyen de jonction supplémentaire différent de la soudure laser par transparence, joignant les bords d'au moins une plaque (2, 3) à l'autre plaque (2, 3).

De petites fuites de communication entre les canaux peuvent être acceptées, car il n'y a pas de perte de fluide vers l'extérieur du refroidisseur, seulement une diminution insignifiante de l'homogénéité thermique à la surface de la batterie. Les fuites externes, indépendamment de leur localisation, ne sont pas acceptables. Un des handicaps de la soudure laser par transparence, est qu'il est exigé un contact parfait entre les surfaces à souder.

Une des exigences internes est de garder le temps de cycle de fabrication du refroidisseur le plus court possible, ainsi dans tous les cas, la jonction entre les canaux est considérée comme étant faite par soudure laser par transparence. L'invention est appliquée sur le périmètre d'une des deux plaques ou dans des zones spécifiques.

Le dispositif peut en outre comporter une ou plusieurs caractéristiques suivantes décrites ci-après, prises séparément ou en combinaison.

Les dimensions du cordon de soudure peuvent être comprises entre 0.5mm et 1.5mm de préférence 0.75mm et 1.25mm.

La localisation de la jonction joignant les bords d'une plaque à l'autre plaque est en fonction de sa position par rapport auxdits bords et dépend de la position des bords des canaux par rapport aux bords de la plaque plane. Cette distance entre la jonction et le bord de la plaque le plus proche peut varier de 0 à 5 cm, de préférence 0.1cm à 3 encore préférentiellement 0.1 cm à 1 cm.

On comprend ici que les « bords » de la plaque peuvent être plats ou emboutis.

On comprend qu'on entend par « soudure d'angle par laser » ou fillet joint welding en anglais, une soudure sans apport de matière entre le bord d'une plaque, de préférence la plaque emboutie, et une zone plate de l'autre plaque, de préférence la plaque plate supérieure. Le laser est utilisé pour fondre la matière des plaques pour réaliser la soudure entre celles-ci.

Dans le cas de la soudure laser avec un fil d'apport de matière, ou filler wire welding en anglais, la soudure peut être réalisée avec la même position des plaques par exemple, mais un fil de matière est fondu afin d'apporter la matière qui va former le cordon de soudure.

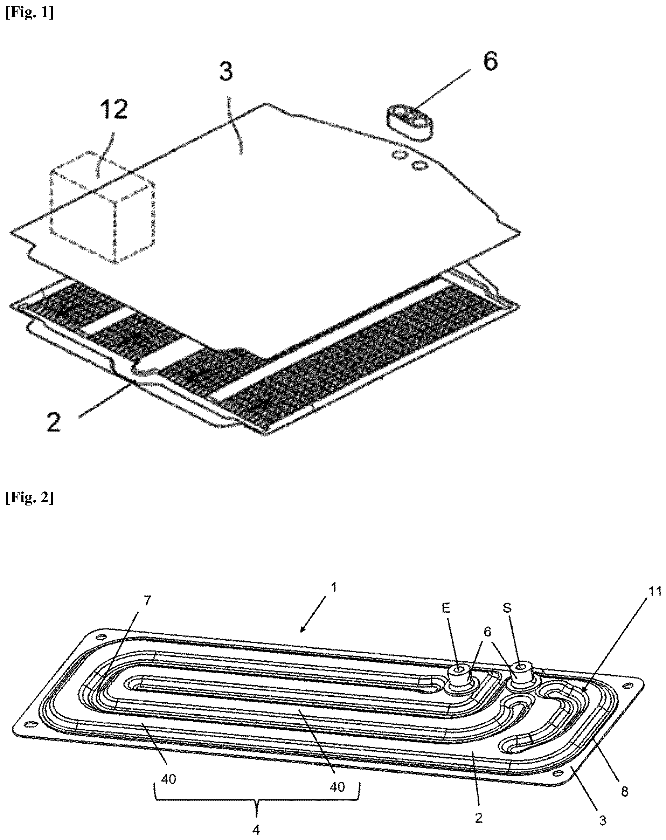

On a représenté sur la figure 1 un dispositif de régulation thermique 1 de l'art antérieur comportant un ensemble de cellules de batterie 12 à refroidir, par exemple rangées suivant deux rangées ou plus, qui sont en contact thermique avec une plaque supérieure 3 du dispositif de régulation thermique 1. Le dispositif 1 comprend une plaque emboutie 2 et une plaque plane 3 entre lesquelles passe du fluide caloporteur à travers des canaux. La majorité des dispositifs de ce type sont assemblés par brasage dans des grands fours ce qui présente plusieurs inconvénients, notamment le coût de tels fours et leur empreinte carbone lors du fonctionnement.

La figure 2 présente un exemple de réalisation du dispositif de régulation thermique 1 comprenant une première plaque, de préférence emboutie 2 et une seconde plaque, de préférence plane 3. Les canaux 40 de la zone de canaux 4 sont visibles et sont configurés pour comprendre un fluide caloporteur qui parcourt lesdits canaux 40. La fixation d'une plaque sur l'autre est réalisée au niveau de la zone de canaux 4 par soudure laser par transparence, tandis qu'un moyen de jonction supplémentaire différent de la soudure laser par transparence, joint les bords d'au moins une plaque (2, 3) à l'autre plaque (2, 3).

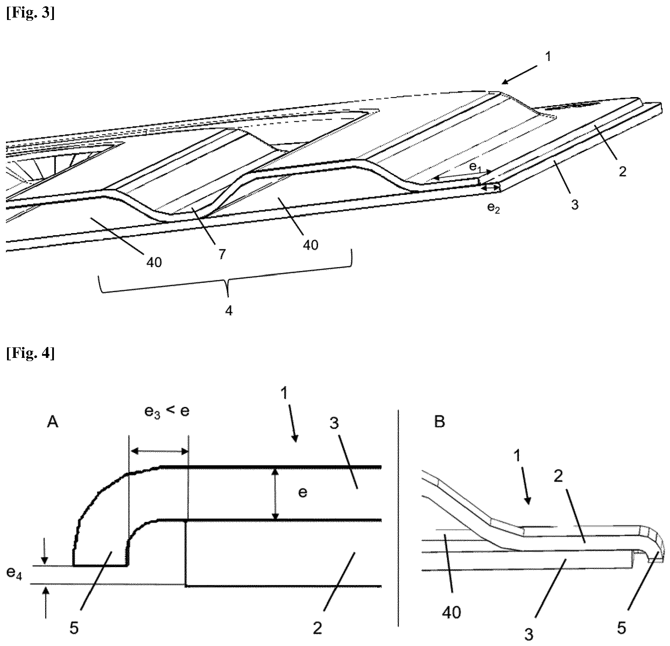

Dans certains modes de réalisation, tel que représenté à titre d'exemple et de façon non limitative à la figure 3, la plaque emboutie 2 et la plaque plane 3 sont jointes par un moyen de jonction au niveau des bords d'une plaque, ici la plaque emboutie 2 sur une autre plaque, ici la plaque plane 3, sur une ligne distante du bord de ladite plaque plane 3.

La plaque plane 3 s'étend ainsi au-delà des bords de l'autre plaque emboutie 2.

Avantageusement, cela permet de réduire le poids du dispositif, car la plaque dont les bords sont fixés à l'autre plaque est plus petite que l'autre. En outre, cela permet de servir de la plaque plus grande comme d'un écran de protection de la jonction d'une partie des impuretés de l'environnement, afin d'améliorer la résistance à la corrosion.

Dans certains modes de réalisation, le moyen de jonction au niveau des bords de la première plaque présente une longueur e1, la seconde plaque s'étendant au-delà des bords de la première plaque (2) sur une longueur e2 comprise 30% et 70% de la longueur e1, de préférence entre 40% et 60% de la longueur e1, de préférence 50% de la longueur de e1.

Cela permet avantageusement notamment de réduire le poids du dispositif tout en bénéficiant de la protection contre la corrosion, et ce de façon optimale.

L'utilisation d'un moyen de jonction différent de la soudure laser notamment par transparence permet en outre d'améliorer l'étanchéité de la plaque en s'affranchissant des inconvénients inhérents à la soudure laser, par exemple par transparence.

Dans certains modes de réalisation, tel que représenté à titre d'exemple et de façon non limitative aux figures 4A et 4B, l'une des plaques (2, 3) s'étend au-delà de l'autre plaque (3, 2) la plaque s'étendant au-delà de l'autre plaque comprenant une déformation formant un repli (5) en direction de l'autre plaque (2, 3).

Cela permet avantageusement d'améliorer la résistance à la corrosion en formant un retour agissant comme un bouclier recouvrant la jonction qui empêche l'humidité et les poussières de venir en contact avec celle-ci.

Cela permet aussi avantageusement de réduire les effets des déformations dues à la jonction par soudure laser réalisée dans la zone de canaux.

Dans certains modes de réalisation, le repli forme un angle compris entre 75° et 105°, de préférence de 90°. De préférence, l'angle est réalisé sur une longueur de plaque e3 dont la valeur est inférieure à l'épaisseur e de la plaque dont est issu le repli.

Dans certains modes de réalisation, le repli ne recouvre pas complètement la plaque vers laquelle le repli est dirigé, de préférence la plaque ainsi recouverte en vue de face présente une épaisseur d'une valeur e4 au moins égale ou supérieure à 0.1 mm non recouverte.

Par « recouvrir », on entend que le repli d'une plaque vient se placer en regard de la plaque en direction de laquelle elle est replié, ce placement en regard étant de préférence partiel, la seconde plaque présentant alors au moins une épaisseur sans vis-à-vis avec le repli d'une valeur e4 au moins égale ou supérieure à 0.1 mm.

Dans certains modes de réalisation, comme représenté à la figure 4A, la seconde plaque supérieure plane 3 comprend la déformation formant repli 5.

Dans certains modes de réalisation, comme représenté à la figure 4B, la première plaque emboutie 2 comprend la déformation formant repli 5.

Cela permet avantageusement de réduire les risques de poussières, de débris ou d'humidité pouvant s'introduire entre les deux plaques.

Cela permet aussi avantageusement de réduire les effets des déformations dues à la jonction par soudure laser réalisée dans la zone de canaux.

La déformation de la première plaque emboutie afin de former les canaux est généralement réalisée par emboutissage, avec une déformation. La longueur de la déformation, en direction de la seconde plaque, à laquelle la première plaque est destinée à être jointe, ne doit pas dépasser l'épaisseur de la ladite seconde plaque. Lors de la jonction des plaques, la soudure laser crée des contraintes d'effort, c'est pourquoi il est avantageux d'avoir des soudures externes solides.

Dans certains modes de réalisations, la soudure laser se fait de l'intérieur de la plaque tel que le centre, vers l'extérieur, afin de pouvoir gérer au mieux lesdites contraintes d'effort créées par la déformation puis la soudure des plaques.

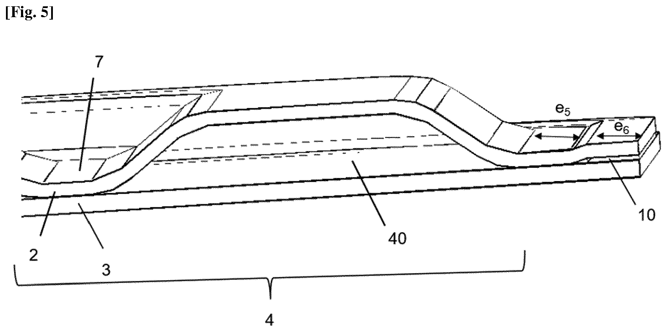

Dans certains modes de réalisation, tel que représenté à titre d'exemple et de façon non limitative à la figure 5, une des deux plaques comprend autour de la zone de canaux 4 un embouti 11 qui comporte un adhésif 10 tel que de la colle formant joint d'étanchéité comprimé entre les deux plaques (2, 3).

L'embouti 11 est de préférence bordé d'au moins un côté, de préférence du côté le plus proche du centre du dispositif 1, par une jonction entre les deux plaques. La jonction située entre la zone de canaux 4 et le joint d'étanchéité 9 peut par exemple être réalisé par une soudure laser notamment par transparence.

Dans certains modes de réalisation, la longueur e6 du moyen de jonction 8 formé par un embouti 11 comportant un adhésif 10, est inférieure à la longueur e5 de la jonction entre les deux plaques bordant ledit moyen de jonction 8. Dans certains modes de réalisations, la longueur de e6 est inférieure à 2mm et la longueur de e5 est inférieure à 2.5mm.

On comprend que les longueurs e1, e2, e3, e4, e5, et e6 sont mesurées à un point donné selon la direction perpendiculaire à la direction principale dans laquelle elle s'étende à ce point.

Dans certains modes de réalisation, non représentés, le dispositif peut être réalisé en plusieurs étapes. Une première étape de réalisation consiste en la jonction d'un bord d'une plaque, ici la première plaque emboutie 2 sur l'autre plaque, ici la seconde plaque 3, au niveau d'une portion de la seconde plaque 3 ne formant pas les bords de ladite seconde plaque 3. Une seconde étape consiste en le retrait de la portion de la seconde plaque comprise entre la jonction entre la première et la seconde plaque et les bords de la seconde plaque, de façon à ce que la seconde plaque ne s'étende pas au-delà de la première plaque, ou alternativement pas au-delà d'une longueur e2 comprise 30% et 70% de la longueur e1, de préférence entre 40% et 60% de la longueur e1, de préférence 50% de la longueur de e1, la longueur e1 étant la longueur du moyen de jonction supplémentaire.

Cela permet avantageusement un procédé d'obtention du dispositif simple, tout en permettant un grand nombre de possibilité de jonction, et afin d'obtenir un dispositif relativement moins lourd.

Dans certains modes de réalisation, la première étape du procédé décrit précédemment comporte une jonction par une soudure d'angle laser.

Avantageusement, ce procédé permet de réaliser une soudure d'angle laser, fiable, tout en conservant un dispositif peu encombrant et moins lourd.

Dans certains modes de réalisation, le moyen de jonction supplémentaire est un adhésif tel que de la colle. Il peut être réalisé sous forme de cordon au niveau d'un embouti réalisé autour du périmètre de la plaque emboutie. Dans ce cas là, le placement de l'adhésif est de préférence réaliser avant les soudures.

La colle peut être choisie parmi les types de colles tels que le PU (polyuréthane), l'EPOXI ou méthacrylate.

Dans certains modes de réalisation, la colle est réticulée par exemple par traitement à la température postérieurement à son application dans le dispositif, la colle étant réalisée en EPDM, NBR ou FKM.

Dans certains modes de réalisation, la soudure laser par transparence est d'abord réalisée entre les canaux, puis est réalisé le second moyen de jonction supplémentaire joignant les bords d'une plaque à l'autre plaque. Réaliser les jonctions dans cet ordre permet avantageusement de réduire les déformations et les contraintes d'efforts subies par le dispositif assemblé.

Le soudage par friction malaxage (Friction Stir Welding en Anglais) est un procédé de soudage à l'état solide qui consiste à assembler deux pièces en les amenant dans un état pâteux grâce à un pion en rotation. Un exemple d'un tel procédé consiste en un outil de forme cylindrique comportant un épaulement et un pion coaxial tourne à vitesse constante sur la ligne de contact entre les pièces à souder, ce qui provoque un « ramollissement » des matériaux, qui deviennent pâteux. L'outil pénètre alors dans le plan de joint et mélange intimement les matériaux. L'assemblage complet est obtenu lors de la progression de l'outil, qui parcourt progressivement toute la zone qui doit être soudée. Les températures maximales atteintes durant le procédé sont inférieures à la température de fusion de la matière : le procédé de soudage par friction malaxage est donc un procédé de soudage à l'état solide.

Dans certains modes de réalisation, le dispositif comprend un tracé de soudage délimitant au moins partiellement la zone de circulation de fluide et au moins un cordon de soudure, correspondant par exemple à la fin du tracé de soudage, est réalisé au contact du tracé de soudage au niveau d'au moins un point de contact, le tracé de soudage et le cordon de soudure ayant une courbure différente l'un par rapport à l'autre au niveau dudit point de contact.

Grâce à la mise en œuvre du cordon de soudure, l'étanchéité du dispositif de refroidissement est assurée avec certitude, et l'arrêt du faisceau laser effectuant le soudage n'altère pas l'étanchéité du dispositif de refroidissement. Tel que cela va être décrit ci-après, le cordon de soudure peut consister ainsi en une opération de soudage additionnelle qui vient entourer une extrémité du tracé de soudage et dès lors assurer une étanchéité autour d'une zone présentant potentiellement des fuites formée par l'extrémité du tracé de soudage, ou bien consister en un prolongement du tracé de soudage pour délocaliser dans une zone non problématique, car éloignée de la zone de circulation de fluide, le risque de fuite potentiellement due à l'arrêt du faisceau laser.

Dans certains modes de réalisation, Le cordon de soudure est établi au moins partiellement en contact avec le tracé de soudage et constitue un soudage supplémentaire renforçant l'étanchéité du dispositif de refroidissement. Autrement dit, le cordon de soudure vient doubler l'étanchéité du dispositif de refroidissement en rendant étanche le tracé de soudage. Ainsi, le fluide de refroidissement ne peut s'écouler à travers un potentiel tracé de soudage car le cordon de soudure vient soit refermer le tracé de soudage, en entourant un potentiel point de fragilité au sein du tracé de soudage, soit prolonger le tracé de soudage pour délocaliser ce potentiel point de fragilité. Dans chacun de ces cas, l'étanchéité est assurée et certifiée grâce à la courbure différente du cordon de soudure par rapport à celle du tracé de soudage au niveau du point de contact entre cordon de soudure et tracé de soudage.

Selon certains modes de réalisation, le cordon de soudure forme un prolongement du tracé de soudage. Autrement dit, le cordon de soudure est mis en œuvre dans la continuité du tracé de soudage et le point de contact entre le tracé de soudage et le cordon de soudure correspond à la jonction entre la fin du tracé de soudage et le début du cordon de soudure. C'est notamment grâce à ce prolongement par le cordon de soudure que l'étanchéité du dispositif de refroidissement est assurée.

Comme cela a été évoqué précédemment, la courbure est différente entre le tracé de soudage et le cordon de soudure. Ainsi, à partir du point de contact, le cordon de soudure dévie d'une trajectoire établie par le tracé de soudage.

Selon certains modes de réalisation, le tracé de soudage présente un profil fermé, le cordon de soudure présentant une extrémité libre à distance du profil fermé du tracé de soudage.

A titre d'exemple, le profil fermé tel que défini par le tracé de soudage peut correspondre au contour des plaques afin d'éviter un écoulement du fluide de refroidissement hors du dispositif de refroidissement. D'une manière générale, le profil fermé peut définir une zone où doit être contenu le fluide de refroidissement, ou à l'inverse une zone où le fluide de refroidissement, pour des motifs divers, ne doit pas pénétrer. Le cordon de soudure quant à lui s'étend jusqu'à l'extrémité libre qui dévie du profil fermé grâce à la courbure différente par rapport à celle du tracé de soudage. Ce prolongement formant une extrémité libre permet d'interrompre le faisceau laser à distance de la fin du tracé de soudage et ainsi de ne pas générer de défauts d'étanchéité tels qu'évoqués précédemment.

### LISTE DES SIGNES DE REFERENCE

1. dispositif de régulation thermique
2. première plaque, emboutie
3. seconde plaque, plane
4. zone de canaux
40. canal
5. Déformation formant repli
6. Connecteurs
7. Soudure laser par transparence
8. Moyen de jonction supplémentaire
10. Adhésif
11. embouti
12. Elément, Dispositif de stockage, composant électrique
E. Entrée de fluide
S. Sortie de fluide

## Revendications

1. Dispositif de régulation thermique, notamment de refroidissement, pour composant électrique susceptible de dégager de la chaleur lors de son fonctionnement, notamment pour un module de stockage d'énergie électrique, ce dispositif comportant une première plaque (2) et une seconde plaque (3) assemblée avec la première plaque délimitée chacune par des bords, pour former ensemble une pluralité de canaux de circulation (40) pour un fluide caloporteur, notamment un fluide réfrigérant, la pluralité de canaux définissant une zone de canaux (4),
l'assemblage des deux plaques (2, 3) étant réalisée par soudure laser, de préférence par transparence, au niveau de la zone de canaux,
le dispositif étant **caractérisé en ce que** le dispositif comprend un moyen de jonction supplémentaire différent de la soudure laser par transparence, joignant les bords d'au moins une plaque (2, 3) à l'autre plaque (2, 3).

2. Dispositif de régulation thermique, selon la revendication précédente, dans lequel le moyen de jonction supplémentaire est choisi parmi la soudure d'angle par laser, la soudure laser avec un fil d'apport de matière, la colle, ou une combinaison de ceux-ci.

3. Dispositif de régulation thermique, selon l'une des revendications précédentes, dans lequel la seconde plaque (3), de préférence plane, s'étend au-delà des bords de la première plaque (2), qui est de préférence emboutie afin de former une partie des parois des canaux (40).

4. Dispositif de régulation thermique, selon l'une des revendications précédentes, dans lequel le moyen de jonction supplémentaire joint les bords d'au moins une plaque (2, 3) à une portion de l'autre plaque ne formant pas les bords de ladite autre plaque.

5. Dispositif de régulation thermique, selon l'une des revendications 1 à 3, dans lequel le moyen de jonction supplémentaire joint les plaques (2, 3) bords à bords.

6. Dispositif de régulation thermique selon l'une des revendications précédentes, dans lequel les bords d'au moins l'une des plaques (2, 3) comprennent une déformation formant un repli (5) en direction de l'autre plaque.

7. Dispositif de régulation thermique, selon l'une des revendications précédentes, dans lequel une des deux plaques (2, 3) comprend autour de la zone de canaux (4) un embouti (11) qui comporte une colle formant joint d'étanchéité (9) comprimé entre les deux plaques.

8. Procédé d'assemblage de deux plaques pour obtenir un dispositif de régulation thermique, notamment de refroidissement, pour composant électrique susceptible de dégager de la chaleur lors de son fonctionnement, notamment pour un module de stockage d'énergie électrique, le procédé étant **caractérisé en ce qu'**il comprend les étapes suivantes,
- Fournir deux plaques délimitée chacune par des bords, au moins une des plaques étant emboutie afin de former une partie des parois des canaux de façon à former avec l'autre plaque ensemble une pluralité de canaux de circulation pour un fluide caloporteur, notamment un fluide réfrigérant, la pluralité de canaux définissant une zone de canaux,
- Soudure laser, de préférence par transparence, des deux plaques au niveau de la zone de canaux,
- Puis jonction des bords d'une plaque à l'autre plaque par un moyen de jonction supplémentaire différent.

9. Procédé d'assemblage selon l'une des revendications précédentes, qui comprend en outre une étape supplémentaire de déformation des bords d'une plaque de façon à former un repli vers l'autre plaque.

10. Procédé d'assemblage selon l'une des revendications précédentes, qui comprend en outre une étape de mise en place de colle formant un joint dans paroi emboutie de canaux définissant la totalité du périmètre de la zone de canaux et formant un canal d'étanchéité, de façon à ce que la colle est comprimée par les deux plaques lors de leur assemblage, notamment suivi d'une étape de traitement thermique de la colle dans la paroi emboutie une fois les plaques du dispositif assemblées et ladite colle comprimée.

## Patentansprüche

1. Vorrichtung zur thermischen Regulierung, insbesondere zur Kühlung, für elektrische Bauteile, die während ihres Betriebs Wärme abgeben können, insbesondere für ein Modul zur Speicherung elektrischer Energie, wobei diese Vorrichtung eine erste Platte (2) und eine zweite Platte (3) umfasst, die mit der ersten Platte zusammengebaut ist und jeweils durch Ränder begrenzt wird, um gemeinsam eine Vielzahl von Zirkulationskanälen (40) für ein Wärmeträgerfluid, insbesondere ein Kältemittel, zu bilden, wobei die Vielzahl von Kanälen einen Kanalbereich (4) definiert, die Verbindung der beiden Platten (2, 3) durch Laserschweißen, vorzugsweise durch Transparenz, im Bereich der Kanalzone erfolgt, wobei die Vorrichtung **dadurch gekennzeichnet ist, dass** sie ein zusätzliches Verbindungsmittel umfasst, das sich vom Laserdurchsichtsschweißen unterscheidet und die Ränder mindestens einer Platte (2, 3) mit der anderen Platte (2, 3) verbindet.

2. Vorrichtung zur thermischen Regulierung nach dem vorhergehenden Anspruch, bei der das zusätzliche Verbindungsmittel aus Laser-Kehlnahtschweißen, Laserschweißen mit einem Zusatzdraht, Klebstoff oder einer Kombination davon ausgewählt ist.

3. Vorrichtung zur thermischen Regulierung nach einem der vorhergehenden Ansprüche, bei der die zweite Platte (3), vorzugsweise eben, sich über die Ränder der ersten Platte (2) hinaus erstreckt, die vorzugsweise tiefgezogen ist, um einen Teil der Kanalwände (40) zu bilden.

4. Vorrichtung zur thermischen Regulierung nach einem der vorhergehenden Ansprüche, bei der das zusätzliche Verbindungsmittel die Ränder mindestens einer Platte (2, 3) mit einem Abschnitt der anderen Platte verbindet, der nicht die Ränder der besagten anderen Platte bildet.

5. Vorrichtung zur thermischen Regulierung nach einem der Ansprüche 1 bis 3, bei der das zusätzliche Verbindungsmittel die Platten (2, 3) Rand an Rand verbindet.

6. Vorrichtung zur thermischen Regulierung nach einem der vorhergehenden Ansprüche, bei der die Ränder mindestens einer der Platten (2, 3) eine Verformung aufweisen, die eine Umfalzung (5) in Richtung der anderen Platte bildet.

7. Vorrichtung zur thermischen Regulierung nach einem der vorhergehenden Ansprüche, bei der eine der beiden Platten (2, 3) um den Kanalbereich (4) herum eine Prägung (11) aufweist, die einen als Dichtung wirkenden Klebstoff (9) enthält, der zwischen den beiden Platten komprimiert wird.

8. Verfahren zur Montage zweier Platten zur Herstellung einer Vorrichtung zur thermischen Regulierung, insbesondere zur Kühlung, für elektrische Bauteile, die während ihres Betriebs Wärme abgeben können, insbesondere für ein Modul zur Speicherung elektrischer Energie, wobei das Verfahren **dadurch gekennzeichnet ist, dass** es die folgenden Schritte umfasst:
- Bereitstellen von zwei Platten, die jeweils durch Ränder begrenzt sind, wobei mindestens eine der Platten tiefgezogen ist, um einen Teil der Kanalwände zu bilden, sodass sie zusammen mit der anderen Platte eine Vielzahl von Zirkulationskanälen für ein Wärmeträgerfluid, insbesondere ein Kältemittel, bildet, wobei die Vielzahl von Kanälen einen Kanalbereich definiert,
- Laserschweißen, vorzugsweise durch Transparenz, der beiden Platten im Bereich der Kanalzone,
- Anschließend Verbinden der Ränder einer Platte mit der anderen Platte durch ein anderes zusätzliches Verbindungsmittel.

9. Montageverfahren nach einem der vorhergehenden Ansprüche, das ferner einen zusätzlichen Schritt der Verformung der Ränder einer Platte umfasst, um eine Umfalzung zur anderen Platte hin zu bilden.

10. Montageverfahren nach einem der vorhergehenden Ansprüche, das ferner einen Schritt zur Aufbringung eines als Dichtung wirkenden Klebstoffs in der tiefgezogenen Kanalwand umfasst, die den gesamten Umfang des Kanalbereichs definiert und einen Dichtungskanal bildet, sodass der Klebstoff beim Zusammenbau durch die beiden Platten komprimiert wird, insbesondere gefolgt von einem Schritt der Wärmebehandlung des Klebstoffs in der tiefgezogenen Wand, nachdem die Platten der Vorrichtung zusammengebaut und der besagte Klebstoff komprimiert wurde.

## Claims

1. Thermal regulation device, in particular for cooling, for an electrical component liable to generate heat during operation, in particular for an electrical energy storage module, this device comprising a first plate (2) and a second plate (3) assembled with the first plate, each delimited by edges, to form together a plurality of circulation channels (40) for a heat transfer fluid, in particular a refrigerant fluid, the plurality of channels defining a channel zone (4), the assembly of the two plates (2, 3) being achieved by laser welding, preferably by transparency, at the level of the channel zone, the device being **characterised in that** the device comprises an additional joining means different from laser welding by transparency, joining the edges of at least one plate (2, 3) to the other plate (2, 3).

2. Thermal regulation device according to the preceding claim, wherein the additional joining means is selected from angle laser welding, laser welding with a filler wire, adhesive, or a combination thereof.

3. Thermal regulation device according to one of the preceding claims, wherein the second plate (3), preferably flat, extends beyond the edges of the first plate (2), which is preferably stamped in order to form part of the walls of the channels (40).

4. Thermal regulation device according to one of the preceding claims, wherein the additional joining means joins the edges of at least one plate (2, 3) to a portion of the other plate that does not form the edges of said other plate.

5. Thermal regulation device according to one of Claims 1 to 3, wherein the additional joining means joins the plates (2, 3) edge to edge.

6. Thermal regulation device according to one of the preceding claims, wherein the edges of at least one of the plates (2, 3) comprise a deformation forming a fold (5) in the direction of the other plate.

7. Thermal regulation device according to one of the preceding claims, wherein one of the two plates (2, 3) comprises, around the channel zone (4), a stamped portion (11) which includes an adhesive forming a sealing gasket (9) compressed between the two plates.

8. Method of assembling two plates to obtain a thermal regulation device, in particular for cooling, for an electrical component liable to generate heat during operation, in particular for an electrical energy storage module, the method being **characterised in that** it comprises the following steps,
- Providing two plates each delimited by edges, at least one of the plates being stamped in order to form part of the walls of the channels so as to form together with the other plate a plurality of circulation channels for a heat transfer fluid, in particular a refrigerant fluid, the plurality of channels defining a channel zone,
- Laser welding, preferably by transparency, of the two plates at the level of the channel zone,
- Then joining the edges of one plate to the other plate by a different additional joining means.

9. Assembly method according to one of the preceding claims, which further comprises an additional step of deforming the edges of one plate so as to form a fold towards the other plate.

10. Assembly method according to one of the preceding claims, which further comprises a step of applying an adhesive forming a seal in the stamped wall of the channels defining the entire perimeter of the channel zone and forming a sealing channel, such that the adhesive is compressed by the two plates during their assembly, in particular followed by a heat treatment step of the adhesive in the stamped wall once the plates of the device are assembled and said adhesive is compressed.
